# EUROPEAN PATENT APPLICATION

(11) **EP 4 637 226 A1**
(43) Date of publication of application: **22.10.2025**
(21) Application number: 23902010.0
(22) Date of filing: 16.05.2023
(51) Int. Cl.: H04W 56/00

(54) **WIRELESS NETWORK NODE SYNCHRONIZATION METHOD, SYSTEM AND DEVICE, AND READABLE STORAGE MEDIUM**

(30) Priority: 12.12.2022 CN 202211596884
(71) Applicant: Shenzhen Inovance Technology Co., Ltd., Shenzhen, Guangdong 518000 (CN)
(72) Inventor: ZHOU, Xiong, Shenzhen, Guangdong 518000 (CN); RUAN, Shuisheng, Shenzhen, Guangdong 518000 (CN); LI, Changgeng, Shenzhen, Guangdong 518000 (CN)
(74) Representative: Osterhoff, Utz
(86) International application number: PCT/CN2023/094613
(87) International publication number: WO 2024/124797

(57) **Abstract**

A wireless network node synchronization method, a wireless network node synchronization system, a wireless network node synchronization device and a readable storage medium are provided. In the present application, the slave node sends a first signal to the master node based on local timing. The master node obtains the deviation duration between the first signal and its own local signal sending beat and sends the deviation duration to the slave node. The slave node obtains the transmission delay between the slave node and the master node after receiving the deviation duration, thereby achieving time synchronization between the two nodes based on the transmission delay.

## Description

### CROSS-REFERENCE TO RELATED APPLICATIONS

This application claims priority to Chinese Patent Application No. 202211596884.2, filed on December 12, 2022, the entire contents of which are incorporated herein by reference.

### TECHNICAL FIELD

The present application relates to the technical field of communication, and in particular to a wireless network node synchronization method, a wireless network node synchronization system, a wireless network node synchronization device and a readable storage medium.

### BACKGROUND

In the field of industrial control, collaboration between multiple nodes (such as control nodes, drive nodes or sensor nodes) requires each node to perform actions synchronously or in an orderly manner, so it is very important for each node to maintain time synchronization for industrial control.

The existing synchronization scheme mainly adopts the synchronization mechanism based on timestamp. For example, the two nodes each send and receive data once, the sender carries an accurate timestamp in the data packet, and the receiver records the accurate local time of reception, so as to calculate the transmission delay of the link. This method is more mature in wired networks. In wireless networks, due to the mobility of nodes, the transmission delay between nodes changes rapidly. If synchronization is performed frequently, since each synchronization needs to carry a timestamp, two sending and receiving processes need to be completed, resulting in a large overhead, which is particularly prominent in the overhead ratio of industrial networks with relatively low throughput.

The above content is only to assist in understanding the technical solution of the present application, and it does not mean that the above contents are recognized as related art.

### SUMMARY

The main purpose of the present application is to provide a wireless network node synchronization method, aiming to solve the technical problem of high overhead of the current synchronization mechanism based on timestamp.

In order to achieve the above purpose, the present application provides a wireless network node synchronization method, the wireless network node includes a master node and a slave node, the wireless network node synchronization method is applied to the slave node, and the method includes following steps:taking a moment of receiving a second signal sent by the master node as a reference beat point, taking a second number of the second signal as a number of the reference beat point, and generating a first local signal sending beat based on a preset beat interval of the reference beat point;sending a first signal to the master node based on a first beat point corresponding to a first number of the first signal in the first local signal sending beat;receiving a deviation duration generated by the master node based on the first signal, and generating a transmission delay between the slave node and the master node based on the deviation duration, the deviation duration is generated by the master node comparing a second moment of a second beat point corresponding to the first number in a second local signal sending beat with an actual receiving moment of the master node receiving the first signal; and synchronizing with the master node based on the transmission delay.

Further, the sending the first signal to the master node based on the first beat point corresponding to the first number of the first signal in the first local signal sending beat includes:determining the first beat point corresponding to the first number in the first local signal sending beat; and sending the first signal to the master node in advance by a preset duration relative to the first beat point, the preset duration is a difference between a first moment corresponding to the first beat point and an actual sending moment of the first signal.

Further, the generating the transmission delay between the slave node and the master node based on the deviation duration includes:taking a sum of the preset duration and the deviation duration as a new preset duration, and sending the first signal to the master node in advance by the preset duration relative to the first beat point corresponding to the first signal in the first local signal sending beat;in response to that the deviation duration is not received again within the preset duration, taking half of the preset duration and the deviation duration as the transmission delay between the slave node and the master node; or in response to that the deviation duration is received again within the preset duration, generating a new first local signal sending beat based on the second number of the second signal carrying the deviation duration, and taking the sum of the preset duration and the deviation duration as the new preset duration.

Further, before the sending the first signal to the master node in advance by the preset duration relative to the first beat point, the method further includes: receiving preset prior information sent by the master node; calculating a transmission distance of a signal between the slave node and the master node based on a transmission loss of the preset prior information; calculating the transmission duration of the signal between the slave node and the master node based on the transmission distance; and taking twice the transmission duration as an initial preset duration.

In order to achieve the above purpose, the present application further provides a wireless network node synchronization method, the wireless network node includes a master node and a slave node, the wireless network node synchronization method is applied to the master node, and the method includes following steps: sending a second signal to the slave node based on a second local signal sending beat, where the second signal is used by the slave node to generate a first local signal sending beat; receiving a first signal sent by the slave node based on the first signal at a first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node to make the slave node generate a transmission delay based on the deviation duration and synchronize with the master node.

Further, the receiving the first signal sent by the slave node based on the first signal at the first beat point corresponding to the first local signal sending beat includes: receiving the first signal sent by the slave node in advance by a preset duration relative to a first beat point corresponding to the first signal in the first local signal sending beat, the preset duration is a difference between a first moment corresponding to the first beat point and an actual sending moment of the first signal.

Further, the sending the deviation duration to the slave node includes: determining whether a length of the deviation duration is within a preset allowable error range; in response to that the length of the deviation duration is within the preset allowable error range, determining that the master node is synchronized with the slave node; or in response to that the length of the deviation duration is not within the preset allowable error range, determining that the master node is not synchronized with the slave node, and sending the deviation duration to the slave node.

In order to achieve the above purpose, the present application further provides a wireless network node synchronization system, including: a slave node, configured for: taking a moment of receiving a second signal sent by a master node as a reference beat point, taking a second number of the second signal as a number of the reference beat point, and generating a first local signal sending beat based on a preset beat interval of the reference beat point; sending a first signal to the master node based on a first beat point corresponding to a first number of the first signal in the first local signal sending beat; receiving a deviation duration generated by the master node based on the first signal, and generating a transmission delay between the slave node and the master node based on the deviation duration; and synchronizing with the master node based on the transmission delay; and a master node, configured for: sending a second signal to the slave node based on a second local signal sending beat; receiving the first signal sent by the slave node based on the first signal at the first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node.

In order to achieve the above purpose, the present application further provides a wireless network node synchronization apparatus, the wireless network node includes a master node and a slave node, the wireless network node synchronization apparatus is applied to the slave node, and the wireless network node synchronization apparatus includes: a first generating module, configured for taking a moment of receiving a second signal sent by the master node as a reference beat point, taking a second number of the second signal as a number of the reference beat point, and generating a first local signal sending beat based on a preset beat interval of the reference beat point; a first sending module, configured for sending a first signal to the master node based on a first beat point corresponding to a first number of the first signal in the first local signal sending beat; a second generating module, configured for receiving a deviation duration generated by the master node based on the first signal, and generating a transmission delay between the slave node and the master node based on the deviation duration, the deviation duration is generated by the master node comparing a second moment of a second beat point corresponding to the first number in a second local signal sending beat with an actual receiving moment of the master node receiving the first signal; and a synchronizing module, configured for synchronizing with the master node based on the transmission delay.

In order to achieve the above purpose, the present application further provides a wireless network node synchronization apparatus, the wireless network node includes a master node and a slave node, the wireless network node synchronization apparatus is applied to the master node, and the wireless network node synchronization apparatus includes: a second sending module, configured for sending a second signal to the slave node based on a second local signal sending beat, where the second signal is used by the slave node to generate a first local signal sending beat; a first receiving module, configured for receiving a first signal sent by the slave node based on the first signal at a first beat point corresponding to the first local signal sending beat; a comparing module, configured for comparing a second moment of a second beat point corresponding to a first number of the first signal in the second local signal sending beat with an actual receiving moment of the first signal to obtain the deviation duration; and a third sending module, configured for sending the deviation duration to the slave node to make the slave node generate a transmission delay based on the deviation duration and synchronize with the master node.

In order to achieve the above purpose, the present application further provides a wireless network node synchronization device, including: a memory, a processor, and a wireless network node synchronization program stored in the memory and executable on the processor, when the wireless network node synchronization program is executed by the processor, the steps of the wireless network node synchronization method as described above are implemented.

In order to achieve the above purpose, the present application further provides a readable storage medium, a wireless network node synchronization program is stored on the readable storage medium, and when the wireless network node synchronization program is executed by a processor, the steps of the wireless network node synchronization method as described above are implemented.

The embodiments of the present application provides a wireless network node synchronization method, a wireless network node synchronization system, a wireless network node synchronization device and a readable storage medium. The wireless network node includes a master node and a slave node, the wireless network node synchronization method is applied to the slave node, and the method includes following steps: taking a moment of receiving a second signal sent by the master node as a reference beat point, taking a second number of the second signal as a number of the reference beat point, and generating a first local signal sending beat based on a preset beat interval of the reference beat point; sending a first signal to the master node based on a first beat point corresponding to a first number of the first signal in the first local signal sending beat; receiving a deviation duration generated by the master node based on the first signal, and generating a transmission delay between the slave node and the master node based on the deviation duration, the deviation duration is generated by the master node comparing a second moment of a second beat point corresponding to the first number in a second local signal sending beat with an actual receiving moment of the master node receiving the first signal; and synchronizing with the master node based on the transmission delay.

The wireless network node synchronization method is applied to the master node, and the method includes following steps: sending a second signal to the slave node based on a second local signal sending beat, the second signal is used by the slave node to generate a first local signal sending beat; receiving a first signal sent by the slave node based on the first signal at a first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node to make the slave node generate a transmission delay based on the deviation duration and synchronize with the master node.

In the present application, the slave node will build its own first local signal sending beat based on the second signal sent by the master node, so as to clarify that the signal sending beat of the two nodes is a transmission delay. The slave node will then send the first signal to the master node based on the first local signal sending beat. The master node obtains the deviation duration between the first signal and its own second local signal sending beat and sends it to the slave node. The slave node can obtain the transmission delay between the slave node and the master node based on the received deviation duration, thereby realizing the time synchronization between the two nodes based on the transmission delay. Compared with the existing synchronization mechanism based on timestamps, the signal to achieve synchronization in the present application does not need to contain timestamps, and only needs to receive the timing signal sent by the master node once, which greatly reduces the network overhead required for synchronization and meets the application scenario with relatively low throughput of industrial networks. In addition, for the first signal sent by the slave node, the master node will compare the second moment corresponding to the first signal in the local timing signal with its actual receiving moment to obtain the deviation duration, thereby realizing the rapid judgment and perception of whether the master node and the slave node are synchronized, and then send the deviation duration to the slave node, so as to realize the rapid correction of the deviation between the two nodes and achieve synchronization.

### BRIEF DESCRIPTION OF THE DRAWINGS

FIG. 1 is a schematic diagram of the device structure of hardware operating environment involved in the embodiment of the present application.
FIG. 2 is a schematic flowchart of a wireless network node synchronization method according to a first embodiment of the present application.
FIG. 3 is a schematic flowchart of the wireless network node synchronization method according to a second embodiment of the present application.
FIG. 4 is a schematic flowchart of the wireless network node synchronization method according to a third embodiment of the present application.
FIG. 5 is a schematic flowchart of the wireless network node synchronization method according to a fourth embodiment of the present application.
FIG. 6 is a schematic flowchart of the wireless network node synchronization method according to a fifth embodiment of the present application.
FIG. 7 is a schematic diagram of a scenario of a first signal being sent in advance in the wireless network node synchronization method of the present application.
FIG. 8 is a schematic diagram of a scenario of sending the first signal in the wireless network node synchronization method of the present application.
FIG. 9 is a schematic diagram of a scenario of receiving the first signal in the wireless network node synchronization method of the present application.
FIG. 10 is a schematic structural diagram of a wireless network node synchronization apparatus in the wireless network node synchronization method of the present application.
FIG. 11 is a schematic structural diagram of another wireless network node synchronization apparatus in the wireless network node synchronization method of the present application.

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are only to explain the present application and are not to limit the present application.

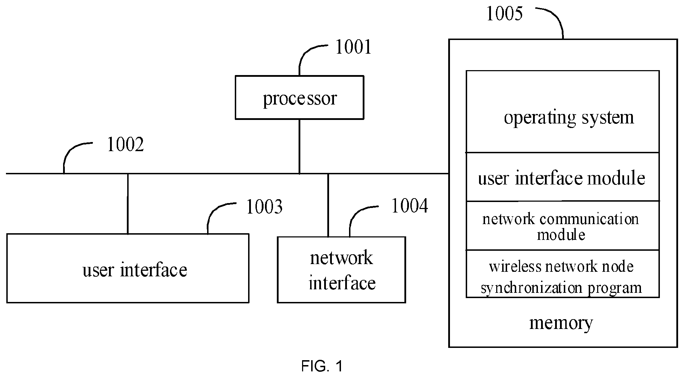

As shown in FIG. 1, FIG. 1 is a schematic diagram of the device structure of hardware operating environment involved in the embodiment of the present application.

The device of the embodiment of the present application can be a servo structure, or can be an electronic terminal device with network communication function such as a PC, a smart phone, a tablet computer, a portable computer, etc.

As shown in FIG. 1, the device may include a processor 1001, such as a CPU, a network interface 1004, a user interface 1003, a memory 1005, and a communication bus 1002. The communication bus 1002 is configured to implement communication between the components. The user interface 1003 may include a display, an input unit such as a keyboard. The user interface 1003 may also include a standard wired interface and a wireless interface. The network interface 1004 may further include a standard wired interface and a wireless interface (such as a WI-FI interface). The memory 1005 may be a high-speed random access memory (RAM) or a non-volatile memory, such as a magnetic disk memory. The memory 1005 may also be a storage device independent of the foregoing processor 1001.

In an embodiment, the device may also include a camera, a Radio Frequency (RF) circuit, a sensor, an audio circuit, a WiFi module, and so on. The sensors may be, for example, a light sensor, a motion sensor, and other sensors. Specifically, the light sensor may include an ambient light sensor and a proximity sensor. The ambient light sensor may adjust the brightness of the display according to the brightness of the ambient light. The proximity sensor may turn off the display and/or the backlight when the mobile terminal is moved to the ear. A gravity acceleration sensor, as a kind of motion sensor, may detect the magnitude of acceleration in various directions (usually three axes). The gravity acceleration sensor may detect the magnitude and direction of gravity when it is stationary, and may be configured to identify the gesture of the mobile terminal (such as horizontal and vertical screen switching, related games, magnetometer attitude calibration), vibration recognition related functions (such as pedometer, tap), etc. The mobile terminal may also be configured with other sensors such as a gyroscope, a barometer, a hygrometer, a thermometer, an infrared sensor, and the like, which will not be repeated here.

Those skilled in the art should understand that the structure shown in FIG. 1 does not constitute a limitation on the device, and may include more or fewer components, a combination of some components, or differently arranged components than shown in the figure.

As shown in FIG. 1, the memory 1005 as a computer storage medium may include an operating system, a network communication module, a user interface module, and a wireless network node synchronization program.

In the device shown in FIG. 1, the network interface 1004 is mainly configured to connect to a background server and perform data communication with the background server. The user interface 1003 is mainly configured to connect to a client (user) and perform data communication with the client. The processor 1001 may be configured to call the wireless network node synchronization program stored on the memory 1005, and perform the following steps.

The method is applied to a slave node, and includes taking a moment of receiving a second signal sent by the master node as a reference beat point, taking a second number of the second signal as a number of the reference beat point, and generating a first local signal sending beat based on a preset beat interval of the reference beat point;
sending a first signal to the master node based on a first beat point corresponding to a first number of the first signal in the first local signal sending beat; receiving a deviation duration generated by the master node based on the first signal, and generating a transmission delay between the slave node and the master node based on the deviation duration, the deviation duration is generated by the master node comparing a second moment of a second beat point corresponding to the first number in a second local signal sending beat with an actual receiving moment of the master node receiving the first signal; and synchronizing with the master node based on the transmission delay.

Further, the processor 1001 may call the wireless network node synchronization program stored in the memory 1005, and further perform the following steps: the sending the first signal to the master node based on the first beat point corresponding to the first number of the first signal in the first local signal sending beat includes: determining the first beat point corresponding to the first number in the first local signal sending beat; and sending the first signal to the master node in advance by a preset duration relative to the first beat point, the preset duration is a difference between a first moment corresponding to the first beat point and an actual sending moment of the first signal.

Further, the processor 1001 may call the wireless network node synchronization program stored in the memory 1005, and further perform the following steps: the generating the transmission delay between the slave node and the master node based on the deviation duration includes: taking a sum of the preset duration and the deviation duration as a new preset duration, and sending the first signal to the master node in advance by the preset duration relative to the first beat point corresponding to the first signal in the first local signal sending beat; in response to that the deviation duration is not received again within the preset duration, taking half of the preset duration and the deviation duration as the transmission delay between the slave node and the master node; or in response to that the deviation duration is received again within the preset duration, generating a new first local signal sending beat based on the second number of the second signal carrying the deviation duration, and taking the sum of the preset duration and the deviation duration as the new preset duration.

Further, the processor 1001 may call the wireless network node synchronization program stored in the memory 1005, and further perform the following steps: before the sending the first signal to the master node in advance by the preset duration relative to the first beat point, the method further includes: receiving preset prior information sent by the master node; calculating a transmission distance of a signal between the slave node and the master node based on a transmission loss of the preset prior information; calculating the transmission duration of the signal between the slave node and the master node based on the transmission distance; and taking twice the transmission duration as an initial preset duration.

Further, the processor 1001 may call the wireless network node synchronization program stored in the memory 1005, and further perform the following steps.

The method is applied to the master node, and includes sending a second signal to the slave node based on a second local signal sending beat, where the second signal is used by the slave node to generate a first local signal sending beat; receiving a first signal sent by the slave node based on the first signal at a first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node to make the slave node generate a transmission delay based on the deviation duration and synchronize with the master node.

Further, the processor 1001 may call the wireless network node synchronization program stored in the memory 1005, and further perform the following steps: the receiving the first signal sent by the slave node based on the first signal at the first beat point corresponding to the first local signal sending beat includes: receiving the first signal sent by the slave node in advance by a preset duration relative to a first beat point corresponding to the first signal in the first local signal sending beat, the preset duration is a difference between a first moment corresponding to the first beat point and an actual sending moment of the first signal.

Further, the processor 1001 may call the wireless network node synchronization program stored in the memory 1005, and further perform the following steps: the sending the deviation duration to the slave node includes: determining whether a length of the deviation duration is within a preset allowable error range; in response to that the length of the deviation duration is within the preset allowable error range, determining that the master node is synchronized with the slave node; or in response to that the length of the deviation duration is not within the preset allowable error range, determining that the master node is not synchronized with the slave node, and sending the deviation duration to the slave node.

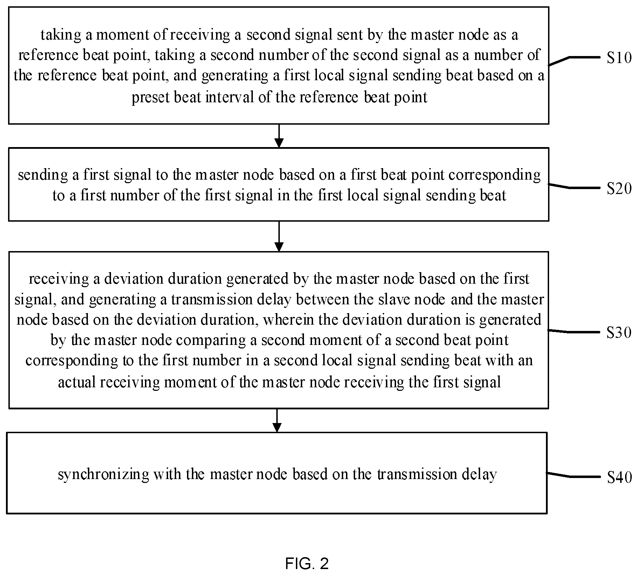

As shown in FIG. 2, a first embodiment of the present application provides a wireless network node synchronization method. The wireless network node includes a master node and a slave node, the wireless network node synchronization method is applied to the slave node, and the method includes following steps:
Step S10, taking a moment of receiving a second signal sent by the master node as a reference beat point, taking a second number of the second signal as a number of the reference beat point, and generating a first local signal sending beat based on a preset beat interval of the reference beat point.

It should be noted that currently, wireless networks can be divided into two categories according to their topology types: star networks and mesh networks. In star networks or mesh networks, the synchronization between nodes can be completed by pairwise synchronization between adjacent nodes, and pairwise synchronization can determine the time required for wireless frame transmission between two nodes. It can be understood that after determining the transmission time of the signal between any two nodes, each node can determine a unified time reference. In this embodiment, take the synchronization between two adjacent communication nodes as an example, that is, the wireless network will include a master node and a slave node, and the slave node will be synchronized based on the master node. It can be understood that the master node and the slave node in a wireless network in this embodiment are not fixed, that is, a slave node can act as the master node of another adjacent node after completing the synchronization with the master node. For example, node B is adjacent to node A and node C respectively. Initially, node A is the master node and node B is the slave node. After node B is synchronized based on node A, node B will be the master node again, and the corresponding node C will be the slave node, and node C will be synchronized based on node B.

In this embodiment, the implementation subject of the wireless network node synchronization method of the present application is the slave node. The second signal sent by the master node to the slave node, and the second signal sent by the slave node to the master node, can be a signal for normal communication between the master node and the slave node, or a synchronization signal specifically used for synchronization. The above-mentioned first local signal sending beat is the local signal sending beat of the slave node. The local signal sending beat is the local time with a fixed time interval beat, and the beat point of each beat corresponds to a moment in the local time.

The second signal sent by the master node to the slave node is a wireless frame. Usually, the length of a wireless frame is 10ms, and the beat interval of the corresponding local signal sending beat can be 10ms, such as a Frequency Division Duplexing (FDD) frame. An FDD frame can be divided into 20 subframes, such as #0 subframe, #1 subframe, #2 subframe,..., #19 subframe. The #0 subframe contains a specific signal, which is the number of the wireless frame. Usually, the number of the wireless frame is generated by the node based on the local signal. For example, the node can choose to send the wireless frame at the beat point of the local signal sending beat, and the number of the beat point is the number of the wireless frame sent at the beat point. The second signal sent by the master node to the slave node is sent by the master node at each beat point in the second local signal sending beat. The slave node takes the moment when the second signal is received as a reference beat point, and uses the second number in the second signal as the number of the reference beat point. Based on the reference beat point, the preset beat intervals are successively set to obtain each beat point in the first local signal sending beat, and the number of each beat point increases sequentially. The preset beat interval is the same as the beat interval in the second local signal sending beat of the master node. At this time, the first local signal sending beat of the slave node is not consistent with the second local signal sending beat of the master node, and the first local signal lags behind the second local signal sending beat. It can be understood that the generation process of the above-mentioned first local signal can be considered to be generated based on the second number alignment in the second signal, but in actual application, the first local signal sending beat does not have to be generated based on the reference number alignment, and the actual receiving moment of the received reference signal can also be adaptively adjusted to obtain the reference beat point, but the calculation amount of the transmission delay is increased. Therefore, in this embodiment, the slave node will use an alignment method to generate the first local timing signal. Step S20, sending a first signal to the master node based on a first beat point corresponding to a first number of the first signal in the first local signal sending beat.

In this embodiment, when the slave node sends the first signal to the master node, it can be sent to the master node based on the first number of the first signal (the position of the first beat point corresponding to the first number in the first local signal sending beat). For example, when sending the first signal with a first number of 3, the corresponding beat point numbered 3 in the first local signal sending beat can be sent. Step S30, receiving a deviation duration generated by the master node based on the first signal, and generating a transmission delay between the slave node and the master node based on the deviation duration, where the deviation duration is generated by the master node comparing a second moment of a second beat point corresponding to the first number in a second local signal sending beat with an actual receiving moment of the master node receiving the first signal.

The slave node will receive the deviation duration generated by the master node based on the first signal of the slave node. The deviation duration is generated by the master node comparing the second moment of the second beat point corresponding to the first number in the second local signal sending beat with the actual receiving moment of the master node receiving the first signal. If the beat interval is set to o, and the accurate transmission delay is also set to o, then the first local signal sending beat will lag behind the second local signal sending beat by the length of o, that is, the beat point 3 in the second local signal sending beat corresponds to the beat point 2 of the first local signal in time. The first signal with a frame code of 2 is sent at the beat point 2 of the first local signal sending beat, and the actual time when the master node receives the first signal should be the beat point 4 in the second local signal sending beat (it takes a time of o to transmit the signal). The master node subtracts the time corresponding to beat point 4 from the second time corresponding to beat point 2 to obtain the deviation duration (two beat intervals), and takes half of the deviation duration as the transmission delay. Step S40, synchronizing with the master node based on the transmission delay.

If the transmission delay between the slave node and the master node is determined, the slave node and the master node can achieve time synchronization, such as the slave node can delay a transmission delay from the actual receiving moment of the signal sent by the master node to determine the actual sending moment of the signal. In addition, other synchronization methods will not be described here.

In this embodiment, the method includes: taking a moment of receiving a second signal sent by the master node as a reference beat point, taking a second number of the second signal as a number of the reference beat point, and generating a first local signal sending beat based on a preset beat interval of the reference beat point; sending a first signal to the master node based on a first beat point corresponding to a first number of the first signal in the first local signal sending beat; receiving a deviation duration generated by the master node based on the first signal, and generating a transmission delay between the slave node and the master node based on the deviation duration, where the deviation duration is generated by the master node comparing a second moment of a second beat point corresponding to the first number in a second local signal sending beat with an actual receiving moment of the master node receiving the first signal; and synchronizing with the master node based on the transmission delay. That is, in the present application, the slave node will build its own first local signal sending beat based on the second signal sent by the master node, so as to clarify that the signal sending beat of the two nodes is a transmission delay. The slave node will then send the first signal to the master node based on the first local signal sending beat. The master node will obtain the deviation duration between the first signal and its own second local signal sending beat and send the deviation duration to the slave node. The slave node can obtain the transmission delay between the slave node and the master node based on the received deviation duration, thereby realizing the time synchronization between the two nodes based on the transmission delay. Compared with the existing synchronization mechanism based on timestamp, the signal used to achieve synchronization in the present application does not need to contain timestamps, and only needs to receive the timing signal sent by the master node once, which greatly reduces the network overhead required for synchronization and meets the application scenario with relatively low throughput of industrial networks. In addition, for the first signal sent by the slave node, the master node will compare the second moment corresponding to the first signal in the local timing signal with its actual receiving moment to obtain the deviation duration, thereby realizing the rapid judgment and perception of whether the master node and the slave node are synchronized, and then send the deviation duration to the slave node after the corresponding deviation duration, so as to realize the rapid correction of the deviation between the two nodes and achieve synchronization.

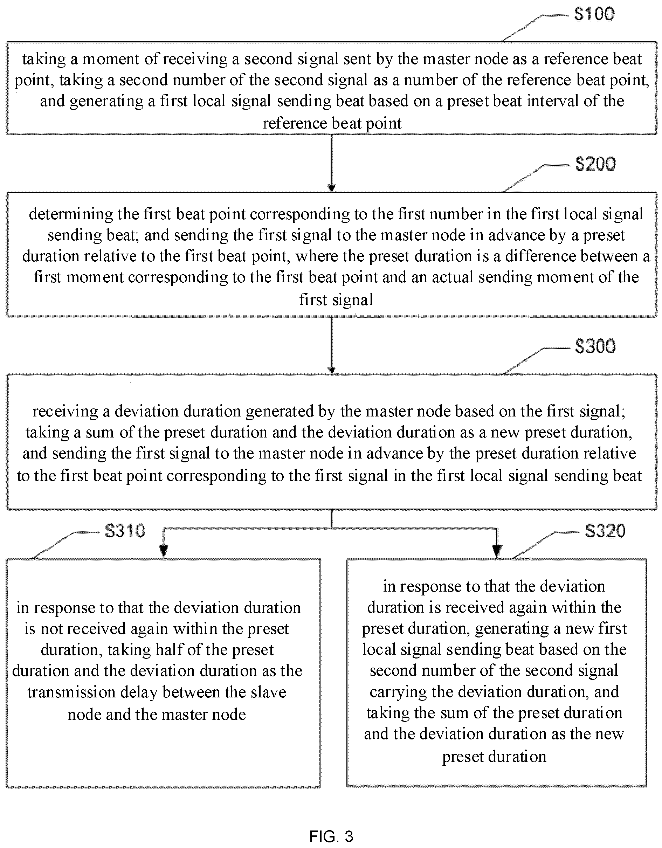

Further, as shown in FIG. 3, the present application provides a second embodiment of the wireless network node synchronization method based on the first embodiment. In this embodiment, the same or similar contents as those in the above embodiment can be referred to the above description, and will not be described in detail later. The steps of the wireless network node synchronization method include: Step S100, taking a moment of receiving a second signal sent by the master node as a reference beat point, taking a second number of the second signal as a number of the reference beat point, and generating a first local signal sending beat based on a preset beat interval of the reference beat point; Step S200, determining the first beat point corresponding to the first number in the first local signal sending beat; and sending the first signal to the master node in advance by a preset duration relative to the first beat point, where the preset duration is a difference between a first moment corresponding to the first beat point and an actual sending moment of the first signal; Step S300, receiving a deviation duration generated by the master node based on the first signal; taking a sum of the preset duration and the deviation duration as a new preset duration, and sending the first signal to the master node in advance by the preset duration relative to the first beat point corresponding to the first signal in the first local signal sending beat; Step S310, in response to that the deviation duration is not received again within the preset duration, taking half of the preset duration and the deviation duration as the transmission delay between the slave node and the master node; or Step S320, in response to that the deviation duration is received again within the preset duration, generating a new first local signal sending beat based on the second number of the second signal carrying the deviation duration, and taking the sum of the preset duration and the deviation duration as the new preset duration.

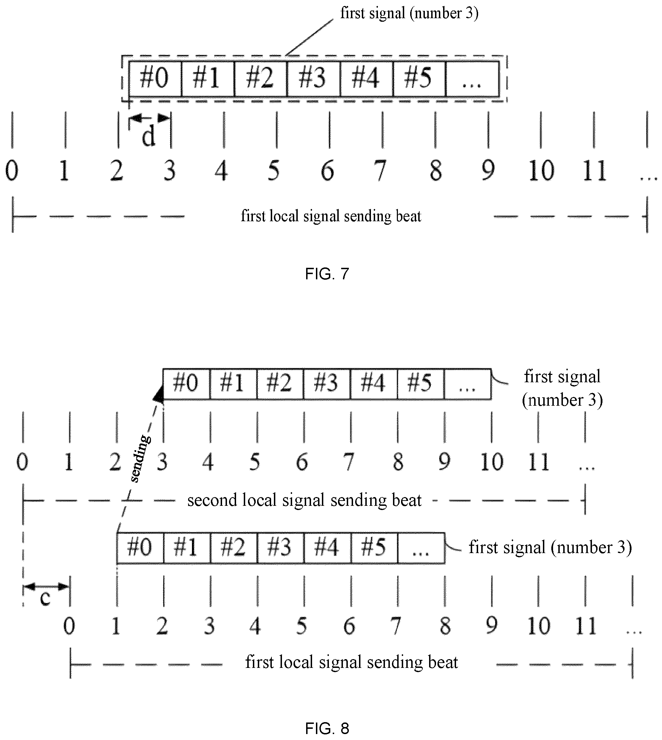

In this embodiment, when the slave node sends the first signal to the master node, in addition to sending the first signal at the position of the first beat point corresponding to the first signal, the first signal may also be sent in advance relative to the first beat point. When the slave node sends the first signal to the master node, it first determines the first beat point corresponding to the first number of the first signal in the first local signal sending beat, and then sends the first signal in advance by a preset duration relative to the first beat point. The preset duration is the difference between the first moment corresponding to the first beat point and the actual sending moment of the first signal. The initial value of the preset duration can be a default value set by the technician. The transmission delay between the two nodes can be estimated, and twice the transmission delay is used as the preset duration, for example, any value selected in the interval [0, c] is used as the estimated transmission delay. c is the protection time interval reserved for the signal sent by the node during design, which is determined by the characteristics of the signal itself and will not be repeated here. As shown in FIG. 7, FIG. 7 is a schematic diagram of a scenario of a first signal being sent in advance in the wireless network node synchronization method of the present application. The figure includes the first signal and the first local signal sending beat. The first signal is numbered 3 (i.e., the first number is 3), and each beat point of the first local signal sending beat has a corresponding number. If not sent in advance, the first signal will be sent at the corresponding time of the local time (i.e., the above-mentioned first moment) at the 3 beat point of the first local signal sending beat. However, in this embodiment, when sending a signal from a node to a master node, it will be sent in advance. As shown in FIG. 7, the first signal numbered 3 will be sent to the master node in advance by d time (i.e., the above-mentioned preset duration) at the 3 beat point in the first local signal sending beat. It can be understood that if the actual first local signal sending beat lags behind the second local signal sending beat by one transmission time, and the preset duration length in advance is exactly two transmission delays, then the actual receiving moment of the master node receiving the first signal is the same as the second time corresponding to the first number of the first signal in the second local signal sending beat of the master node. At this time, it can be determined that the first local signal sending beat is indeed one transmission time behind the second local signal sending beat, the period length of one transmission time is half of the preset duration length, and the slave node and the master node are synchronized. As shown in FIG. 8, FIG. 8 is a schematic diagram of a scenario of sending the first signal in the wireless network node synchronization method of the present application. To clearly illustrate this scenario, the following settings are made: the first local signal sending beat of the slave node lags behind the second local signal sending beat c of the master node (c is set to be equivalent to the length of a subframe in the wireless frame), and the corresponding setting is that the transmission delay required for the slave node to send a wireless frame to the master node is also c. In FIG. 8, the slave node sends the first signal numbered 3 to the master node in advance for a preset duration (twice the transmission delay, that is, twice c, such as the first signal numbered 3 is sent at the beat point 1 in the figure). After the transmission delay c, the actual receiving moment when the master node receives the first signal is the time corresponding to the second local signal sending beat point 3, that is, the actual receiving moment is the same as the second time. On the contrary, if the actual receiving moment when the master node receives the first signal is different from the second time corresponding to the first number of the first signal in the second local signal sending beat of the master node, the master node will send the deviation of these two times to the slave node.

After the master node receives the first signal sent by the slave node, it will generate a deviation duration based on the first signal, that is, the master node receives the first signal sent by the slave node; compare the second moment corresponding to the first number of the first signal in the second local signal sending beat with the actual receiving moment of the first signal, and obtain the deviation duration between the second moment and the actual receiving moment; send the deviation duration to the slave node, so that the slave node generates a transmission delay based on the deviation duration. Specifically, when the slave node receives the deviation duration sent by the master node, it will generate a transmission delay between the master node and the master node based on the preset duration and the deviation duration. For example, when the first local signal sending beat lags behind the second local signal sending beat by a transmission delay, the slave node uses half of the sum of the preset duration and the deviation duration as the transmission delay between the slave node and the master node (e.g., transmission delay = (d+d1)/2, where d is the preset duration and d1 is the deviation duration).

Besides, it should be noted that theoretically, when calculating the transmission delay, the slave node only needs to receive the deviation duration sent by the master node once, and use half of the sum of the deviation duration and the preset duration as the transmission delay. However, in actual application, the transmission delay calculated at this time may be inaccurate due to objective factors such as hardware or transmission. Thus, to further ensure the accuracy of the calculated transmission delay, after receiving the deviation duration sent by the master node, the slave node does not directly calculate the transmission delay, but takes the sum of the preset duration and the received deviation duration as the new preset duration, and executes the step of sending the first signal to the master node in advance by the preset duration relative to the first beat point corresponding to the first signal in the first local signal sending beat. The specific process is not repeated here. It can be understood that if the newly obtained preset duration is actually twice the transmission delay, the deviation duration obtained by the master node after receiving the first signal is zero. In order to reduce the communication overhead between the two nodes, the master node can stop sending the deviation duration. On the contrary, if the newly obtained preset duration is not actually twice the transmission delay, the deviation duration obtained by the master node after receiving the first signal is not zero, and the master node can continue to send the deviation duration to ensure the accuracy of the calculated transmission delay.

Further, if the slave node does not receive the deviation duration within the preset duration, it means that the deviation duration calculated by the master node is zero or smaller, and the slave node uses half of the preset duration at this time as the transmission delay between the slave node and the master node. The preset duration can be set by the technician according to the actual situation, and no specific restrictions are made here. In the actual application process, especially in the wireless network scenario, the position of each network node may move. For example, after the position of the slave node or the master node moves, the transmission delay between the two nodes will change, and the master node will also send the deviation duration accordingly. If the slave node receives the deviation duration within the preset duration, in addition to executing the step of adding the preset duration and the deviation duration as the new preset duration, in order to further ensure the accuracy of the calculated transmission delay, the slave node will reinitialize the first local signal sending beat, that is, based on the second number alignment of the second signal carrying the deviation duration, a new first local signal sending beat is generated. The alignment generation process can refer to the above content and will not be repeated here.

It can be understood that in this embodiment, when the slave node sends the first signal, it will be sent in advance for a preset duration, so that the master node can determine whether it is synchronized with the slave node without knowing the transmission delay. For example, in the case of synchronization and the slave node sends the first signal in advance, the deviation duration calculated by the master node will remain zero or close to zero. However, in the case of synchronization and the slave node does not send the first signal in advance, the deviation duration calculated by the master node is not zero and has a corresponding relationship with the transmission delay. In the case where the slave node does not send the first signal in advance, the master node cannot compare the calculated deviation duration with zero to simply determine whether the slave node is synchronized with the master node.

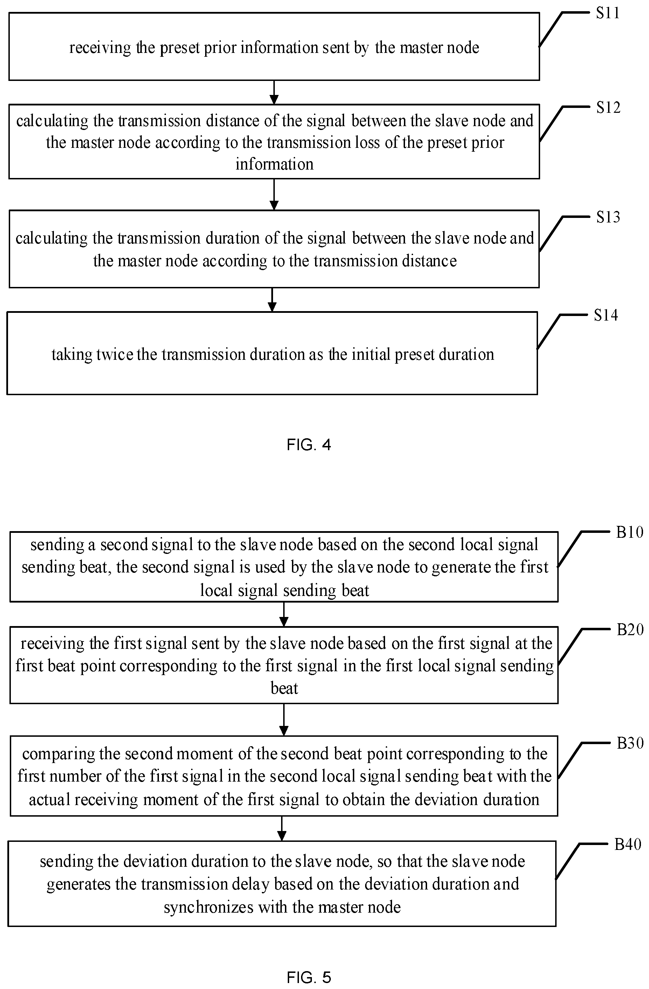

Further, as shown in FIG. 4, the present application provides a third embodiment of the wireless network node synchronization method based on the second embodiment.

Before the step of sending the first signal to the master node in advance by the preset duration relative to the first beat point, the method further includes: Step S11, receiving the preset prior information sent by the master node; Step S12, calculating the transmission distance of the signal between the slave node and the master node according to the transmission loss of the preset prior information; Step S13, calculating the transmission duration of the signal between the slave node and the master node according to the transmission distance; Step S14, taking twice the transmission duration as the initial preset duration.

In this embodiment, a method for estimating the initial preset duration is mainly provided. The transmission delay estimated by the slave node can be determined based on the preset prior information sent by the master node. For example, the slave node has the preset prior information Ps of the master node's transmission power (the prior information can be obtained by the master node through broadcasting, one-to-one, or through protocol provisions, etc.). The slave node can estimate the path propagation loss PL=Ps-Pr between the master node and the slave node based on the received power Pr of the preset prior information actually received. The propagation distance can be estimated according to the path loss PL, and then the transmission delay can be calculated according to the propagation distance D and the speed of light. Different scenarios have corresponding path loss models, and the path loss value has a functional relationship with the propagation distance. Take the free space path loss model as an example: PL=20Ig(F)+20Ig(D)+32.4, where F is the frequency, which is known to both the sender and the receiver, and D is the propagation distance in km. Therefore, if PL is known, D can be inferred. In addition, the transmission delay can also be obtained by establishing a database of Ps-Pr and propagation delay through past experience data, and the transmission delay can be obtained by looking up the table. It can be understood that in this embodiment, the number of times the master node sends the deviation duration will be reduced by generating an accurate preset duration, thereby reducing the network overhead required for synchronization.

Further, as shown in FIG. 5, the present application provides a fourth embodiment of the wireless network node synchronization method. The wireless network includes a master node and a slave node, and the wireless network node synchronization method is applied to the master node. In this embodiment, the same or similar contents as the above embodiment can be referred to the above introduction, and will not be described in detail later. The method includes: Step B10, sending a second signal to the slave node based on the second local signal sending beat, the second signal is used by the slave node to generate the first local signal sending beat.

In this embodiment, when the master node sends the second signal to the slave node, the second signal is sent at the beat point corresponding to the second number of the second signal in the second local signal sending beat. The slave node takes the moment of receiving the second signal as a reference beat point, takes the second number of the second signal as the number of the reference beat point, and generates the first local signal sending beat based on the preset beat interval of the reference beat point. Thus, the generated first local signal sending beat lags behind the second local timing signal by a transmission delay. Step B20, receiving the first signal sent by the slave node based on the first signal at the first beat point corresponding to the first signal in the first local signal sending beat.

Specifically, the master node receives the first signal sent by the slave node based on the first number of the first signal at the position of the first beat point corresponding to the first number in the first local signal sending beat, for example, sending the first signal with the first number 3, then the corresponding beat point with the number 3 in the first local signal sending beat is sent. Step B30, comparing the second moment of the second beat point corresponding to the first number of the first signal in the second local signal sending beat with the actual receiving moment of the first signal to obtain the deviation duration.

Specifically, the master node subtracts the actual receiving moment of the first signal from the second moment of the second beat point corresponding to the first number of the first signal in the second local signal sending beat to obtain the deviation duration. Step B40, sending the deviation duration to the slave node, so that the slave node generates the transmission delay based on the deviation duration and synchronizes with the master node.

Specifically, the master node sends the calculated deviation duration to the slave node, so that the slave node can generate a transmission delay based on the deviation duration. For example, when the first local signal sending beat lags behind the second local timing signal by a transmission delay, the slave node can take half of the deviation duration as the transmission delay.

In this embodiment, the master node sends a second signal to the slave node based on the second local signal sending beat, the second signal is used by the slave node to generate the first local signal sending beat; receives the first signal sent by the slave node based on the first signal at the first beat point corresponding to the first local signal sending beat; compares the second moment of the second beat point corresponding to the first number of the first signal in the second local signal sending beat with the actual receiving moment of the first signal to obtain the deviation duration; sends the deviation duration to the slave node so that the slave node can generate the transmission delay based on the deviation duration and synchronize with the master node. That is, in the present application, the slave node will send a first signal to the master node based on local timing signal. The master node obtains the deviation duration by comparing the first signal with its own local signal sending beat and sends it to the slave node. The slave node obtains the transmission delay between the slave node and the master node after receiving the deviation duration, thereby realizing the time synchronization between the two nodes based on the transmission delay. Compared with the existing synchronization mechanism based on timestamp, the signal used to achieve synchronization in the present application does not need to include a timestamp, and only needs to receive the timing signal sent by the master node once, which greatly reduces the network overhead required for synchronization and meets the application scenario with relatively low throughput of industrial networks. In addition, for the first signal sent by the slave node, the master node will compare the second moment corresponding to the first signal in the local timing signal with its actual receiving moment to obtain the deviation duration, thereby realizing the rapid judgment and perception of whether the master node and the slave node are synchronized, and after the corresponding deviation duration, the deviation duration is sent to the slave node, thereby realizing the rapid correction of the deviation between the two nodes and achieving synchronization.

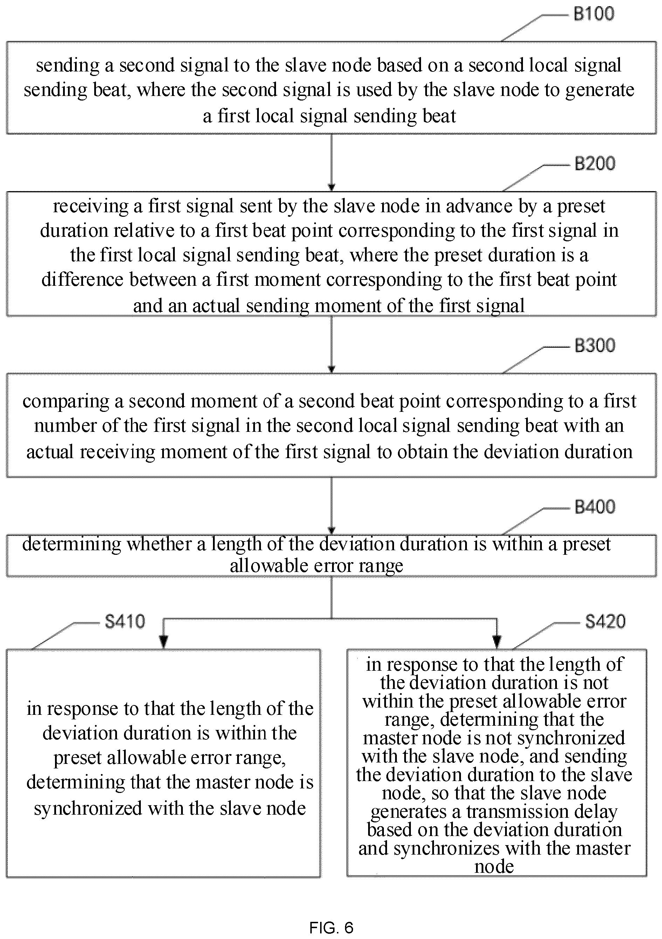

Further, as shown in FIG. 6, the present application provides a fifth embodiment of the wireless network node synchronization method based on the fourth embodiment. In this embodiment, the same or similar contents as those in the above embodiment can be referred to the above description, and will not be described in detail later. The method includes: Step B100, sending a second signal to the slave node based on a second local signal sending beat, where the second signal is used by the slave node to generate a first local signal sending beat; Step B200, receiving a first signal sent by the slave node in advance by a preset duration relative to a first beat point corresponding to the first signal in the first local signal sending beat, where the preset duration is a difference between a first moment corresponding to the first beat point and an actual sending moment of the first signal; Step B300, comparing a second moment of a second beat point corresponding to a first number of the first signal in the second local signal sending beat with an actual receiving moment of the first signal to obtain the deviation duration; Step B400, determining whether a length of the deviation duration is within a preset allowable error range; Step B410, in response to that the length of the deviation duration is within the preset allowable error range, determining that the master node is synchronized with the slave node; or Step B420, in response to that the length of the deviation duration is not within the preset allowable error range, determining that the master node is not synchronized with the slave node, and sending the deviation duration to the slave node, so that the slave node generates a transmission delay based on the deviation duration and synchronizes with the master node.

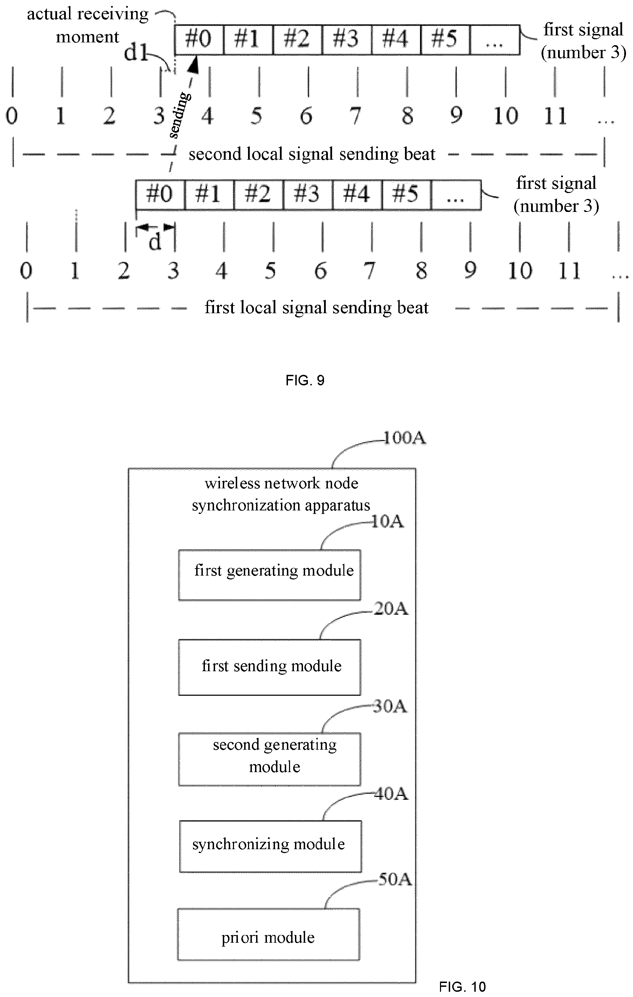

When the master node receives the first signal sent in advance by the slave node, the master node determines the actual receiving moment of the first signal. Then, the master node obtains the first number corresponding to the first signal from the first signal, determines the time (i.e., the second time) of the beat point corresponding to the first frame code in the second timing signal, and subtracts the actual receiving moment from the second time, thereby obtaining the deviation duration between the second time and the actual receiving moment. As shown in FIG. 9, FIG. 9 is a schematic diagram of a scenario of receiving the first signal in the wireless network node synchronization method of the present application. The figure shows that the slave node sends the first signal numbered 3 to the master node in advance for a preset duration d based on the first local signal sending beat. The master node compares the actual receiving moment of the received first signal numbered 3 with the second time corresponding to the beat point numbered 3 in the second local signal sending beat to obtain the deviation duration d1.

Further, in order to balance the accuracy of calculating the transmission delay and the overhead required for synchronization, the master node can determine the size of the deviation duration before sending the deviation duration to the slave node, such as whether the deviation duration is within the preset allowable error range [-n, n]. If it is within the preset allowable error range, it is determined that the master node is synchronized with the slave node and stops sending the deviation duration to the slave node. On the contrary, if the length of the deviation duration is not within the preset allowable error range, it is determined that the master node is not synchronized with the slave node and sends the deviation duration to the slave node. In order to ensure the accuracy of the calculated transmission delay, the judgment condition of the deviation duration can also be set to determine whether the deviation duration is zero. If the deviation duration is zero, it is determined that the master node is synchronized with the slave node and stops sending the deviation duration to the slave node. If the deviation duration is not zero, it is determined that the master node is not synchronized with the slave node and sends the deviation duration to the slave node. Therefore, the slave node can calculate the transmission delay based on the deviation duration and complete the time synchronization between the two nodes. In addition, it should be noted that the deviation duration is usually added to the second signal sent by the master node to the slave node and sent together. If the second signal does not have enough time slots to store the deviation duration, it can also choose not to send the deviation delay, and wait until the next deviation duration is calculated and there are enough time slots in the second signal before sending it. It can be understood that the master node will calculate the deviation duration for the first signal sent by the slave node, so as to realize the fast calculation perception of the master and slave nodes being out of sync. When it perceives different situations, it will send the deviation duration to the slave node to realize the rapid correction of the deviation between the two nodes and achieve synchronization.

Besides, the embodiments of the present application further provide a wireless network node synchronization system, including: a slave node, configured for: taking a moment of receiving a second signal sent by a master node as a reference beat point, taking a second number of the second signal as a number of the reference beat point, and generating a first local signal sending beat based on a preset beat interval of the reference beat point; sending a first signal to the master node based on a first beat point corresponding to a first number of the first signal in the first local signal sending beat; receiving a deviation duration generated by the master node based on the first signal, and generating a transmission delay between the slave node and the master node based on the deviation duration; and synchronizing with the master node based on the transmission delay; and a master node, configured for: sending a second signal to the slave node based on a second local signal sending beat; receiving the first signal sent by the slave node based on the first signal at the first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node.

In an embodiment, the slave node is further configured for: determining the first beat point corresponding to the first number in the first local signal sending beat; and sending the first signal to the master node in advance by a preset duration relative to the first beat point, where the preset duration is a difference between a first moment corresponding to the first beat point and an actual sending moment of the first signal.

In an embodiment, the slave node is further configured for: taking a sum of the preset duration and the deviation duration as a new preset duration, and sending the first signal to the master node in advance by the preset duration relative to the first beat point corresponding to the first signal in the first local signal sending beat; in response to that the deviation duration is not received again within the preset duration, taking half of the preset duration and the deviation duration as the transmission delay between the slave node and the master node; or in response to that the deviation duration is received again within the preset duration, generating a new first local signal sending beat based on the second number of the second signal carrying the deviation duration, and taking the sum of the preset duration and the deviation duration as the new preset duration.

In an embodiment, the slave node is further configured for: receiving preset prior information sent by the master node; calculating a transmission distance of a signal between the slave node and the master node based on a transmission loss of the preset prior information; calculating the transmission duration of the signal between the slave node and the master node based on the transmission distance; and taking twice the transmission duration as an initial preset duration.

In an embodiment, the master node is further configured for: receiving the first signal sent by the slave node in advance by a preset duration relative to a first beat point corresponding to the first signal in the first local signal sending beat, where the preset duration is a difference between a first moment corresponding to the first beat point and an actual sending moment of the first signal.

In an embodiment, the master node is configured for: determining whether a length of the deviation duration is within a preset allowable error range; in response to that the length of the deviation duration is within the preset allowable error range, determining that the master node is synchronized with the slave node; or in response to that the length of the deviation duration is not within the preset allowable error range, determining that the master node is not synchronized with the slave node, and sending the deviation duration to the slave node.

The wireless network node synchronization system provided by the present application adopts the wireless network node synchronization system method in the above embodiment to solve the technical problem that the current synchronization mechanism based on timestamp has high overhead. Compared with the related art, the beneficial effects of the wireless network node synchronization system provided by the embodiment of the present application are the same as the beneficial effects of the wireless network node synchronization method provided by the above embodiments, and the other technical features of the wireless network node synchronization system are the same as the features disclosed in the above embodiment method, which will not be repeated here.

Besides, as shown in FIG. 10, the embodiments of the present application further provide a wireless network node synchronization apparatus 100A. The wireless network node includes a master node and a slave node, the wireless network node synchronization apparatus 100A is applied to the slave node, and the wireless network node synchronization apparatus 100A includes a first generating module 10A, a first sending module 20A, a second generating module 30A and a synchronizing module 40A.

The first generating module 10A is configured for taking a moment of receiving a second signal sent by the master node as a reference beat point, taking a second number of the second signal as a number of the reference beat point, and generating a first local signal sending beat based on a preset beat interval of the reference beat point.

The first sending module 20A is configured for sending a first signal to the master node based on a first beat point corresponding to a first number of the first signal in the first local signal sending beat.

The second generating module 30A is configured for receiving a deviation duration generated by the master node based on the first signal, and generating a transmission delay between the slave node and the master node based on the deviation duration, the deviation duration is generated by the master node comparing a second moment of a second beat point corresponding to the first number in a second local signal sending beat with an actual receiving moment of the master node receiving the first signal.

The synchronizing module 40A is configured for synchronizing with the master node based on the transmission delay.

In an embodiment, the first sending module 10A is further configured for: determining the first beat point corresponding to the first number in the first local signal sending beat; and sending the first signal to the master node in advance by a preset duration relative to the first beat point, where the preset duration is a difference between a first moment corresponding to the first beat point and an actual sending moment of the first signal.

In an embodiment, the second generating module 30A is further configured for: taking a sum of the preset duration and the deviation duration as a new preset duration, and sending the first signal to the master node in advance by the preset duration relative to the first beat point corresponding to the first signal in the first local signal sending beat; in response to that the deviation duration is not received again within the preset duration, taking half of the preset duration and the deviation duration as the transmission delay between the slave node and the master node; or in response to that the deviation duration is received again within the preset duration, generating a new first local signal sending beat based on the second number of the second signal carrying the deviation duration, and taking the sum of the preset duration and the deviation duration as the new preset duration.

In an embodiment, the wireless network node synchronization apparatus 100A further includes a priori module 50A, and the priori module 50A is configured for: receiving preset prior information sent by the master node; calculating a transmission distance of a signal between the slave node and the master node based on a transmission loss of the preset prior information; calculating the transmission duration of the signal between the slave node and the master node based on the transmission distance; and taking twice the transmission duration as an initial preset duration.

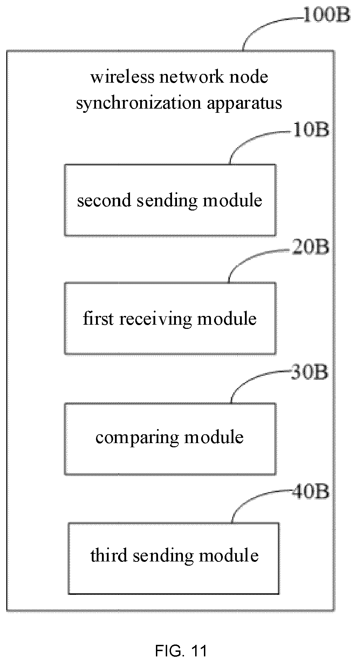

In addition, as shown in FIG. 11, the embodiments of the present application further provides another wireless network node synchronization apparatus 100B, the wireless network node includes a master node and a slave node, the wireless network node synchronization apparatus 100B is applied to the master node, and the wireless network node synchronization apparatus 100B includes a second sending module 10B, a first receiving module 20B, a comparing module 30B and a third sending module 40B.

The second sending module 10B is configured for sending a second signal to the slave node based on a second local signal sending beat, the second signal is used by the slave node to generate a first local signal sending beat.

The first receiving module 20B is configured for receiving a first signal sent by the slave node based on the first signal at a first beat point corresponding to the first local signal sending beat.

The comparing module 30B is configured for comparing a second moment of a second beat point corresponding to a first number of the first signal in the second local signal sending beat with an actual receiving moment of the first signal to obtain the deviation duration.

The third sending module 40B is configured for sending the deviation duration to the slave node to make the slave node generate a transmission delay based on the deviation duration and synchronize with the master node.

In an embodiment, the first receiving module 20B is further configured for: receiving the first signal sent by the slave node in advance by a preset duration relative to a first beat point corresponding to the first signal in the first local signal sending beat, the preset duration is a difference between a first moment corresponding to the first beat point and an actual sending moment of the first signal.

In an embodiment, the third sending module 40B is further configured for: determining whether a length of the deviation duration is within a preset allowable error range; in response to that the length of the deviation duration is within the preset allowable error range, determining that the master node is synchronized with the slave node; or in response to that the length of the deviation duration is not within the preset allowable error range, determining that the master node is not synchronized with the slave node, and sending the deviation duration to the slave node.

The wireless network node synchronization apparatus provided by the present application adopts the wireless network node synchronization method in the above-mentioned embodiment to solve the technical problem that the current synchronization mechanism based on timestamp has high overhead. Compared with the prior art, the beneficial effects of the wireless network node synchronization apparatus provided by the embodiment of the present application are the same as the beneficial effects of the wireless network node synchronization method provided by the above-mentioned embodiment, and other technical features in the wireless network node synchronization apparatus are the same as the features disclosed in the above-mentioned embodiment method, which will not be repeated here.

In addition, the embodiments of the present application further provides a wireless network node synchronization device, including: a memory, a processor, and a wireless network node synchronization program stored in the memory and executable on the processor, the wireless network node synchronization program when executed by the processor implements the steps of the wireless network node synchronization method as described above.

The specific implementation of the wireless network node synchronization device of the present application is basically the same as the embodiments of the wireless network node synchronization method described above, and will not be repeated here.

In addition, the embodiments of the present application further provide a readable storage medium, on which a wireless network node synchronization program is stored, and when the wireless network node synchronization program is executed by a processor, the steps of the wireless network node synchronization method as described above are implemented.

The specific implementation method of the medium of the present application is basically the same as the embodiments of the wireless network node synchronization method described above, and will not be repeated here.

It should be noted that in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The serial numbers of the foregoing embodiments of the present application are only for description, and do not represent the advantages and disadvantages of the embodiments.

Through the description of the above embodiment, those skilled in the art can clearly understand that the above-mentioned embodiments can be implemented by software plus a necessary general hardware platform, of course, it can also be implemented by hardware, but in many cases the former is a better implementation. Based on this understanding, the technical solution of the present application can be embodied in the form of software product in essence or the part that contributes to the existing technology. The computer software product is stored on a storage medium (such as ROM/RAM, magnetic disk, optical disk) as described above, including several instructions to cause a terminal device (which can be a mobile phone, a computer, a server, or a network device, etc.) to execute the method described in each embodiment of the present application.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

## Claims

1. A wireless network node synchronization method, **characterized in that**, the wireless network node comprises a master node and a slave node, the wireless network node synchronization method is applied to the slave node, and the method comprises following steps: taking a moment of receiving a second signal sent by the master node as a reference beat point, taking a second number of the second signal as a number of the reference beat point, and generating a first local signal sending beat based on a preset beat interval of the reference beat point; sending a first signal to the master node based on a first beat point corresponding to a first number of the first signal in the first local signal sending beat; receiving a deviation duration generated by the master node based on the first signal, and generating a transmission delay between the slave node and the master node based on the deviation duration, wherein the deviation duration is generated by the master node comparing a second moment of a second beat point corresponding to the first number in a second local signal sending beat with an actual receiving moment of the master node receiving the first signal; and synchronizing with the master node based on the transmission delay.

2. The wireless network node synchronization method according to claim 1, wherein the sending the first signal to the master node based on the first beat point corresponding to the first number of the first signal in the first local signal sending beat comprises: determining the first beat point corresponding to the first number in the first local signal sending beat; and sending the first signal to the master node in advance by a preset duration relative to the first beat point, wherein the preset duration is a difference between a first moment corresponding to the first beat point and an actual sending moment of the first signal.

3. The wireless network node synchronization method according to claim 2, wherein the generating the transmission delay between the slave node and the master node based on the deviation duration comprises: taking a sum of the preset duration and the deviation duration as a new preset duration, and sending the first signal to the master node in advance by the preset duration relative to the first beat point corresponding to the first signal in the first local signal sending beat; in response to that the deviation duration is not received again within the preset duration, taking half of the preset duration and the deviation duration as the transmission delay between the slave node and the master node; or in response to that the deviation duration is received again within the preset duration, generating a new first local signal sending beat based on the second number of the second signal carrying the deviation duration, and taking the sum of the preset duration and the deviation duration as the new preset duration.

4. The wireless network node synchronization method according to claim 2, wherein before the sending the first signal to the master node in advance by the preset duration relative to the first beat point, the method further comprises: receiving preset prior information sent by the master node; calculating a transmission distance of a signal between the slave node and the master node based on a transmission loss of the preset prior information; calculating the transmission duration of the signal between the slave node and the master node based on the transmission distance; and taking twice the transmission duration as an initial preset duration.

5. A wireless network node synchronization method, **characterized in that**, the wireless network node comprises a master node and a slave node, the wireless network node synchronization method is applied to the master node, and the method comprises following steps: sending a second signal to the slave node based on a second local signal sending beat, wherein the second signal is used by the slave node to generate a first local signal sending beat; receiving a first signal sent by the slave node based on the first signal at a first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node to make the slave node generate a transmission delay based on the deviation duration and synchronize with the master node.

6. The wireless network node synchronization method according to claim 5, wherein the receiving the first signal sent by the slave node based on the first signal at the first beat point corresponding to the first local signal sending beat comprises: receiving the first signal sent by the slave node in advance by a preset duration relative to a first beat point corresponding to the first signal in the first local signal sending beat, wherein the preset duration is a difference between a first moment corresponding to the first beat point and an actual sending moment of the first signal.

7. The wireless network node synchronization method according to claim 5, wherein the sending the deviation duration to the slave node comprises: determining whether a length of the deviation duration is within a preset allowable error range; In response to that the length of the deviation duration is within the preset allowable error range, determining that the master node is synchronized with the slave node; or in response to that the length of the deviation duration is not within the preset allowable error range, determining that the master node is not synchronized with the slave node, and sending the deviation duration to the slave node.

8. A wireless network node synchronization system, **characterized by** comprising: a slave node, configured for: taking a moment of receiving a second signal sent by a master node as a reference beat point, taking a second number of the second signal as a number of the reference beat point, and generating a first local signal sending beat based on a preset beat interval of the reference beat point; sending a first signal to the master node based on a first beat point corresponding to a first number of the first signal in the first local signal sending beat; receiving a deviation duration generated by the master node based on the first signal, and generating a transmission delay between the slave node and the master node based on the deviation duration; and synchronizing with the master node based on the transmission delay; and a master node, configured for: sending a second signal to the slave node based on a second local signal sending beat; receiving the first signal sent by the slave node based on the first signal at the first beat point corresponding to the first local signal sending beat; comparing a second moment of a second beat point corresponding to a first number of the first signal in the second local signal sending beat with an actual receiving moment of the first signal to obtain the deviation duration; and sending the deviation duration to the slave node.

9. A wireless network node synchronization apparatus, **characterized in that**, the wireless network node comprises a master node and a slave node, the wireless network node synchronization apparatus is applied to the slave node, and the wireless network node synchronization apparatus comprises: a first generating module, configured for taking a moment of receiving a second signal sent by the master node as a reference beat point, taking a second number of the second signal as a number of the reference beat point, and generating a first local signal sending beat based on a preset beat interval of the reference beat point; a first sending module, configured for sending a first signal to the master node based on a first beat point corresponding to a first number of the first signal in the first local signal sending beat; a second generating module, configured for receiving a deviation duration generated by the master node based on the first signal, and generating a transmission delay between the slave node and the master node based on the deviation duration, wherein the deviation duration is generated by the master node comparing a second moment of a second beat point corresponding to the first number in a second local signal sending beat with an actual receiving moment of the master node receiving the first signal; and a synchronizing module, configured for synchronizing with the master node based on the transmission delay.

10. A wireless network node synchronization apparatus, **characterized in that**, the wireless network node comprises a master node and a slave node, the wireless network node synchronization apparatus is applied to the master node, and the wireless network node synchronization apparatus comprises: a second sending module, configured for sending a second signal to the slave node based on a second local signal sending beat, wherein the second signal is used by the slave node to generate a first local signal sending beat; a first receiving module, configured for receiving a first signal sent by the slave node based on the first signal at a first beat point corresponding to the first local signal sending beat; a comparing module, configured for comparing a second moment of a second beat point corresponding to a first number of the first signal in the second local signal sending beat with an actual receiving moment of the first signal to obtain the deviation duration; and a third sending module, configured for sending the deviation duration to the slave node to make the slave node generate a transmission delay based on the deviation duration and synchronize with the master node.

11. A wireless network node synchronization device, **characterized by** comprising: a memory, a processor, and a wireless network node synchronization program stored in the memory and executable on the processor, wherein when the wireless network node synchronization program is executed by the processor, the steps of the wireless network node synchronization method according to any one of claims 1 to 7 are implemented.

12. A readable storage medium, **characterized in that**, a wireless network node synchronization program is stored on the readable storage medium, and when the wireless network node synchronization program is executed by a processor, the steps of the wireless network node synchronization method according to any one of claims 1 to 7 are implemented.
